# EUROPEAN PATENT SPECIFICATION

(11) **EP 3 464 998 B1**
(45) Date of publication and mention of the grant of the patent: **30.12.2020**
(21) Application number: 17803159.7
(22) Date of filing: 03.05.2017
(51) Int. Cl.: F21V 21/03, F21S 8/06, H02G 3/20, F21V 17/12, F21V 17/08, F21V 17/16, F21V 23/00

(54) **A SUSPENSION ASSEMBLY FOR SUSPENDING A PENDANT LUMINAIRE FROM A CEILING**
AUFHÄNGUNGSANORDNUNG ZUM AUFHÄNGEN EINER HÄNGENDEN LEUCHTE AN EINER RAUMDECKE
ENSEMBLE DE SUSPENSION POUR SUSPENDRE UN LUSTRE À UN PLAFOND

(30) Priority: 23.05.2016 SE 1650699
(43) Date of publication of application: 10.04.2019
(73) Proprietor: IKEA Supply AG, 4133 Pratteln (CH)
(72) Inventor: HAMMARSTEDT, Håkan, 352 60 Växjö (SE)
(74) Representative: Ström & Gulliksson AB
(86) International application number: PCT/SE2017/050428
(87) International publication number: WO 2017/204713

(56) References cited:
- EP-A2- 2 086 080
- EP-A2- 2 086 080
- CA-A1- 2 471 804
- CA-A1- 2 471 804
- DE-A1- 4 300 521
- DE-A1-102012 006 164
- FR-A1- 2 117 772
- FR-A1- 2 474 144
- FR-A1- 2 474 144
- GB-A- 2 251 983
- JP-A- 2014 022 104
- JP-A- 2016 018 696
- JP-A- 2016 033 859
- KR-A- 20080 044 526
- US-A- 2 114 826

## Description

The invention relates to a suspension assembly for suspending a pendant luminaire from the ceiling.

Such assemblies are known in a plurality of different forms. Examples are disclosed in CH 298671 and EP 2 086 080 A2.

The assembly disclosed in CH 298671 has the disadvantage that mounting a pendant luminaire that has a terminal block or an electric plug connected to its cable is not possible without disconnecting the terminal block, the electric plug, or the luminaire itself. To overcome this drawback, EP 2 086 080 A2 proposes an assembly where a ceiling cup comprises an opening that is large enough to introduce a terminal block or an electric plug without dismounting the same. Furthermore, a nut part that is used to affix the ceiling cup by mating an interior thread thereof with an exterior thread of a suspension device attached to the ceiling is divided along a vertical axial plane to be composed of two separate parts. In this way, the cable of the pendant luminaire can also be introduced into the through-hole of the nut part without dismounting a terminal block or an electric plug connected to the cable.

The two separate parts of this known system each include a portion of a wall of the through-hole comprising the internal thread. In other words, a part of the internal thread is provided on each of the two separate parts. The internal thread that should correspond to the external thread of the suspension device, thus, is only formed after connecting the two separate parts to each other. The two parts need to be precisely aligned after they are connected to each other so that the internal thread can correctly mate with the external thread of the suspension device. Furthermore, to form a fitting interior thread, the thread turns need to be precisely made on the two separate parts. This again requires a precisely made and, thus, expensive mold if the nut part is made by injection molding, for instance.

It is therefore the object of the present invention to provide a simplified suspension assembly for suspending a pendant luminaire from a ceiling, which can particularly be manufactured in a more fault-tolerant way.

This object is achieved with a suspension assembly according to claim 1. Preferred embodiments are specified in the dependent claims.

According to the invention, a fixing element is provided that is configured such that it fixes the ceiling cup against the ceiling when attaching the fixing element to a suspension element by mating an internal thread of the threaded element with an external thread of the suspension element. The fixing element comprises two separate parts that are releasably attachable to each other, or two parts that are connected to each other via a hinge, wherein the threaded element is arranged only on one of the two parts of the fixing element. Since the threaded element is arranged only on one of the two parts of the fixing element, it is not necessary to exactly align the two parts to each other. Since the two parts need not align as precisely as in known systems, the manufacturing process can also be more fault-tolerant and, thus, less expensive.

A pendant luminaire, or pendant light, is a light fixture that hangs from a ceiling, usually suspended by a cable or a cord. The cable may at the same time be used to provide electric power to the electric lamp of the luminaire.

The suspension element may be attachable to the ceiling via a ceiling hook. For that purpose, the suspension element may comprise a through-hole configured to engage with the ceiling hook when attaching the suspension element to the ceiling. It is, however, conceivable that the suspension element is attachable to the ceiling in a different way, for instance, by directly screwing or adhering it to the ceiling.

The external thread of the suspension element may be arranged on an elongated part of the suspension element. The elongated part may have a cylindrical shape, wherein the external thread is longitudinally arranged at least over a part of the total height of the elongated part.

The elongated part may also comprise a longitudinal channel extending along the longitudinal axis of the elongated part. This longitudinal channel may be configured so as to receive a cable or a cord of the pendant luminaire when using the suspension assembly for suspending a pendant luminaire from the ceiling.

The elongated part may be configured such that a cable or cord of the pendant luminaire is laterally insertable into the longitudinal channel of the elongated part. For this purpose, the elongated part may comprise a longitudinal opening or slot. The longitudinal opening or slot may extend over the entire length of the elongated part. The width of the longitudinal opening may be smaller than the diameter of the longitudinal channel. At the same time, the width may be adapted so that a cable or cord can be pressed there through into the longitudinal channel.

Alternatively, a longitudinal slot may be provided, which allows the elongated part to be elastically opened to press the cable or cord into the longitudinal channel. Unless a force is applied to open the slot, the slot may have a substantially zero width.

The suspension element may be configured such that a terminal block can be releasably attached thereto, for instance via a screw connection. In this way, a terminal block attached to a cable of the pendant luminaire can be reliably kept in a fixed position.

The ceiling cup may correspond to an element for covering the suspension element, a possible ceiling hook, a terminal block or an electric plug, and parts of the cable or cord of the pendant luminaire, after suspending the pendant luminaire from the ceiling using the suspension assembly. The ceiling cup may be rotationally symmetric with regard to a longitudinal axis thereof. The ceiling cup may widen from a first diameter at one longitudinal end thereof to a second, larger diameter at a second longitudinal end thereof. The ceiling cup may roughly have a conical shape.

The fixing element may comprise two parts that are connected to each other via a hinge, particularly an integral hinge. The two parts may be pivotable relative to the hinge. The two parts may comprise fixing means for fixing the position of the two parts relative to each other. The fixing means may be configured for releasably connecting the two parts to each other via these fixing means. The fixing means may, for instance, correspond to means for a snap fit connection.

After attaching the two separate parts of the fixing element to each other or after fixing the two parts that are connected to each other via a hinge to each other, a longitudinal channel may be formed configured for receiving a cord or a cable of the pendant luminaire. A part of a wall of said longitudinal channel may be provided on each of the two parts of the fixing element.

The threaded element is arranged only on one of the two parts of the fixing element. The threaded element may particularly be a part of or connected to only one of the two parts of the fixing element. The threaded element being arranged only on one of the two parts of the fixing element may particularly mean that the internal thread itself is arranged only on one of the two parts of the fixing element, or, in other words, not distributed over both parts of the fixing element.

The ceiling cup and the fixing element may be configured such that when mating the internal thread of the threaded element with the external thread of the suspension element, and in the mounting position in which the fixing element fixes the ceiling cup against the ceiling, the fixing element is rotatable relative to the ceiling cup in at least one direction of rotation. In other words, the fixing element is rotatable or revolvable with regard to the ceiling cup. When attaching the fixing element to the suspension element by mating the internal thread of the threaded element with the external thread of the suspension element, the fixing element may be turnable in both directions of rotation with regard to the ceiling cup. Once the ceiling cup is affixed to the ceiling by the fixing element, it may not be possible to continue rotating the fixing element in one direction of rotation (the closing direction). In this case, it may only be possible to turn the fixing element in the direction of rotation leading to a release of the ceiling cup or, in other words, in the direction of rotation that unscrews the fixing element from the suspension element.

Since the fixing element is rotatable with regard to the ceiling cup, it is possible to keep the ceiling cup stationary while turning the fixing element to affix the ceiling cup against the ceiling by mating the internal thread of the threaded element with the external thread of the ceiling suspension. This is advantageous over systems known in the prior art that require turning the ceiling cup itself when mounting the pendant luminaire. Turning the ceiling cup itself may damage the ceiling when further rotation is required although the ceiling cup is already in contact with the ceiling.

The ceiling cup may comprise a first opening that faces towards the ceiling in the mounting position in which the fixing element affixes the ceiling cup to the ceiling, and a second opening opposite to the first opening, wherein the diameter of the second opening is chosen such that a terminal block or an electric plug connected to the cable or cord of the pendant luminaire is insertable through the second opening. In this way, it is possible to insert a cable with a terminal block or an electric plug connected thereto through the second opening into the ceiling cup without dismounting the terminal block or the electric plug from the cable. The second opening may particularly have a (minimum) diameter of equal to or more than 2 cm, particularly of equal to or more than 4 cm, further particularly of equal to or more than 8 cm.

The fixing element may at least partly have a larger diameter than the second opening of the ceiling cup. In this way, it is possible that the fixing element presses the ceiling cup against the ceiling in the mounting position. In other words, in the mounting position, the fixing element impedes a vertical movement of the ceiling cup. The mounting position is obtainable by attaching the fixing element to the ceiling suspension by mating the internal thread of the threaded element with the external thread of the ceiling suspension, with the ceiling cup being in the desired position against the ceiling. In the mounting position, thus, a part of the fixing element may contact or abut a part of the ceiling cup, so that the ceiling cup is clamped between the ceiling and the fixing element.

The fixing element may comprise a gripping portion comprising at least one groove and/or elevation. In this way, it is possible to more securely grip the fixing element.

The two parts of the fixing element may be connectable via a snap-fit connection. This may apply both to the situation where the fixing element comprises two separate parts as well as to the alternative according to which the fixing element comprises two parts that are connected to each other via a hinge. This snap-fit connection allows to releasably attach the two parts to each other.

The threaded element may be cylindrical, wherein a cable or cord of the pendant luminaire is laterally insertable into the interior of the cylindrical threaded element. In other words, the threaded element may comprise a longitudinal channel for receiving a cable or a cord of the pendant luminaire. Thus, the threaded element may be embodied similarly to the elongated part of the ceiling suspension, however, with an internal thread instead of an external thread being provided.

Consequently, the threaded element may comprise a longitudinal opening or slot extending along its longitudinal axis. In this way, similar to the above-described embodiment of the elongated part of the ceiling suspension, a cable may be easily inserted into the longitudinal channel of the threaded element.

The ceiling cup may comprise a cut-out on the side facing the ceiling in the mounting position, so that in the mounting position, a cable can lead into the ceiling cup from the outside via the cut-out. Especially in this case, it is advantageous if the ceiling cup can be kept stationary during mounting. This may be achieved by providing the ceiling cup and the fixing element as rotatable with regard to each other as detailed above.

The fixing element, the suspension element and/or the ceiling cup may be injection-molded parts. Thus, the fixing element, the suspension element and/or the ceiling cup may comprise or consist of a plastic material, in particular a thermoplastic, for example Polyethylene (PE) or Polypropylene (PP). The suspension element may alternatively comprise or consist of a metal, for instance, comprising steel or aluminum.

By arranging the fixing element and the ceiling cup rotatable relative to each other in at least one direction of rotation, it allows keeping the ceiling cup stationary while only rotating the fixing element for attaching the fixing element to the suspension element. This is different from the assembly disclosed, for instance, in EP 2 086 080 A2, where the ceiling cup has to be turned together with the fixing element to mount the pendant luminaire. As a part of this mounting process, the upper edge of the ceiling cup will finally come into contact with the surface of the ceiling and be pressed against it. Any rotational movement will then lead to potential damage of the ceiling due to the friction of the ceiling cup against the ceiling. This drawback can be avoided by the fixing element and the ceiling cup being rotatable relative to each other.

The suspension assembly, particularly the suspension element, the ceiling cup, and the fixing element may comprise one or more of the above-described features.

Advantageous embodiments will now be described in combination with the enclosed figures.
- Figure 1: shows the basic setup of a suspension assembly according to an embodiment of the invention;
- Figure 2: shows a suspension element used in a suspension assembly according to an embodiment of the invention;
- Figures 3A and 3B: show an exemplary fixing element used in a suspension assembly according to an embodiment of the invention; and
- Figures 4A and 4B: illustrate different steps of suspending a pendant luminaire using a suspension assembly according to an embodiment of the invention;
- Figure 5: shows a second embodiment of a basic setup of a suspension assembly according to an embodiment of the invention;
- Figure 6: shows an exemplary fixing element used in a suspension assembly according to a second embodiment of the invention;
- Figures 7A and 7B: show an exemplary fixing element used in a suspension assembly according to a second embodiment of the invention.

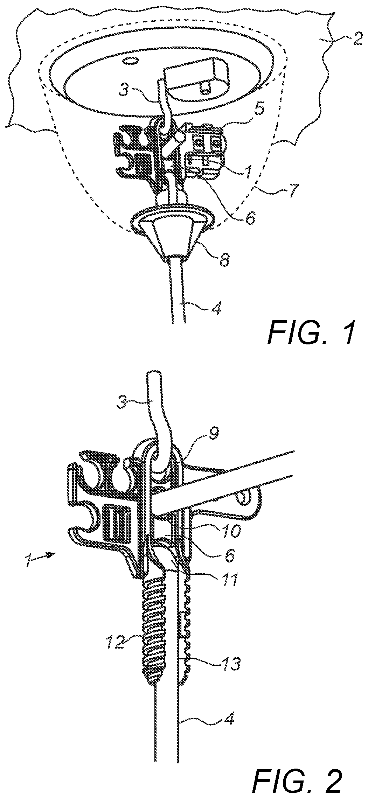

As seen from Figure 1, the exemplary suspension assembly comprises a suspension element 1 attached to a ceiling 2 via a ceiling hook 3. The suspension element 1 is configured for affixing a cable 4 of the pendant luminaire.

The suspension element 1 of Figure 1 further shows a terminal block 5 attached thereto. The cable 4 may be connected to said terminal block 5 (not shown). Alternatively, the cable 4 may itself comprise a terminal block (also called "screw terminal") or an electric plug to be connected to a cable or plug socket provided at the ceiling.

For affixing the cable 4 of the pendant luminaire, the suspension element 1 comprises two through-holes and a lid 6 in between, for gripping or clamping the cable 4.

Further details regarding the suspension element will be described with reference to Figure 2 below.

The exemplary suspension assembly of Figure 1 further comprises a ceiling cup 7 configured to cover the suspension element 1, the ceiling hook 3, and parts of the cable 4 in the mounted position of the pendant luminaire. The exemplary ceiling cup 7 is rotationally symmetric with regard to its longitudinal axis and widens from a first diameter at its lower end to a second, larger diameter at its upper end facing the ceiling 2. The ceiling cup 7 has a first circular opening at its upper end and a second circular opening at its lower end. The first and second openings may both be through-holes in the ceiling cup 7.

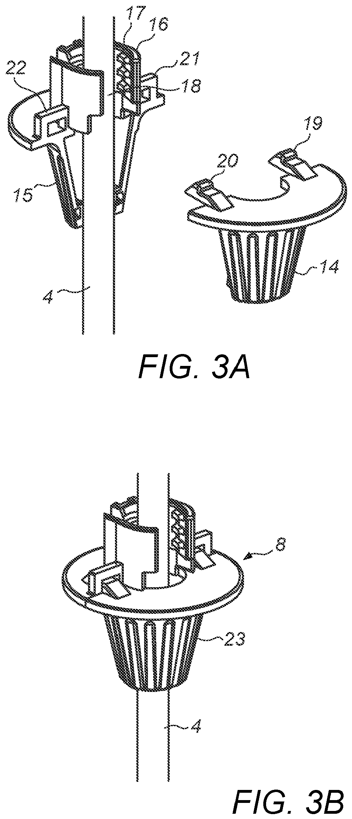

The ceiling cup 7 may be affixed against the ceiling 2 via a fixing element 8. As further detailed below, the fixing element 8 is screwed to the suspension element 1 by mating an internal thread of the fixing element 8 with an external thread of the suspension element 1. In the mounting position, the fixing element 8 prevents the movement of the ceiling cup 7 perpendicularly to the ceiling 2. For that purpose, the diameter of the fixing element 8, at least in part, is larger than a diameter of the second opening of the ceiling cup 7 at the lower end thereof. The fixing element 8 will be described in further detail with reference to Figures 3A and 3B below.

The pendant luminaire is not further illustrated herein. It may be of any form as long as it comprises or is attachable to a cable or chord for hanging it from the ceiling using a suspension assembly as disclosed herein.

Figure 2 shows a suspension element according to an embodiment, attached to the ceiling via a ceiling hook 3. A through-hole 9 is provided in the suspension element 1 to hang the suspension element 1 from the ceiling hook 3. As an alternative, it would be conceivable that the suspension element 1 itself comprises a hook to be hanged from a corresponding ring or other element attached to and extending downwards from the ceiling.

Figure 2 further shows two through-holes 10 and 11, which in combination with a lid 6 allow fixing the cable 4 in a friction-locked manner.

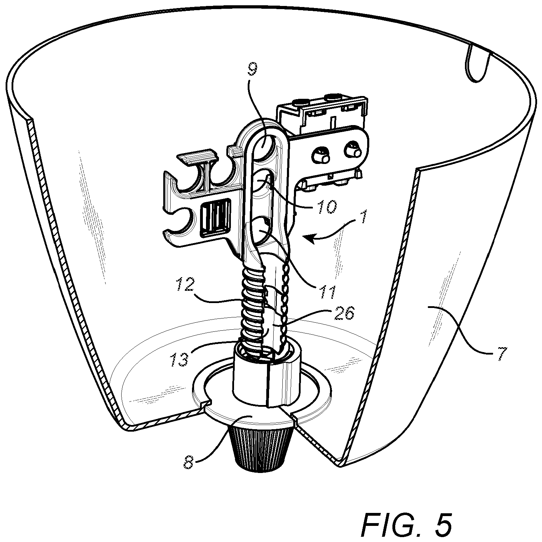

Further visible from Figure 2 is an elongated part of the suspension element 1 comprising an external thread 12 extending, in this example, along the entire length of the elongated part. A longitudinal channel 26 (see Fig. 5) inside the elongated part is provided for receiving the cable 4. For inserting the cable 4 into the longitudinal channel 26, a longitudinal opening 13 is provided, the width thereof being smaller than the diameter of the longitudinal channel 26. The elongated part is cylindrical in this example.

Figures 3A and 3B illustrate a fixing element 8 according to an embodiment of the present invention. The fixing element 8 comprises two separate parts 14, 15 that are releasably attachable to each other via a snap-fit connection. For the snap-fit connection, elements 19, 20 are provided on the first part 14, while corresponding openings 21 and 22 are provided on the second part 15.

Only on the second part 15, a threaded element 16 is provided, comprising an internal thread 17. The internal thread 17 is configured to cooperate with an external thread 12 of the suspension element 1 as illustrated, for instance, in Figure 2. The threaded element 16 is cylindrical in this example, with the internal thread 17 extending along the complete length of the threaded element 16. A longitudinal opening 18 is provided so that the cable 4 can be inserted into a longitudinal channel formed inside the threaded element 16.

Figure 3B shows the fixing element 8 after connecting the two separate parts 14, 15 to each other. The fixing element 8 comprises a gripping portion 23, comprising several grooves. These grooves allow for a better grip of the fixing element 8. As it can be seen from Figure 3B, the two parts 14, 15 form a longitudinal channel for receiving the cable 4, apart from but lining up with the longitudinal channel of the threaded element 16.

According to an alternative, the fixing element may comprise two parts connected to each other via a hinge, in particular via an integral hinge (not shown). Also in this case, fixing means may be provided for aligning the two parts to each other, particularly in a releasable manner. The fixing means may comprise means for a snap-fit connection similar to those illustrated in Figures 3A and 3B. Providing the hinge to connect the two parts of the fixing element has the advantage of reducing loose parts while still providing for a possibility to easily introduce a cable or chord into a longitudinal channel of the fixing element.

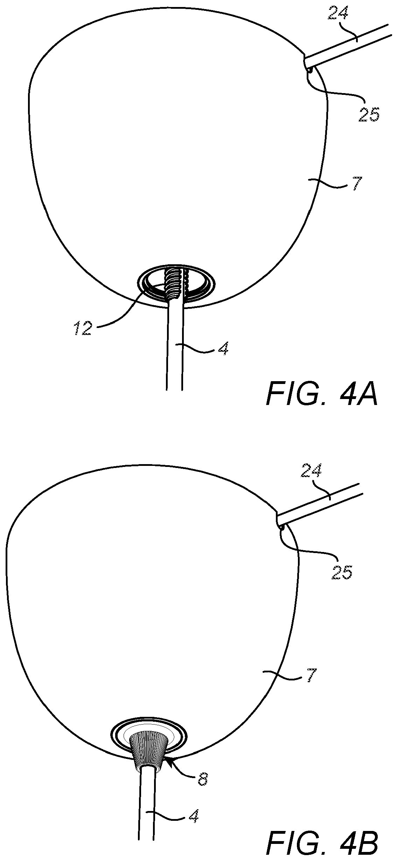

Figure 4A illustrates a ceiling cup 7 arranged so as to at least partially cover a suspension element attached to a ceiling. The external thread 12 of the suspension element is shown to protrude from the lower opening of the ceiling cup 7. This is only optional. The ceiling cup and the suspension element may also be configured such that the elongated part of the suspension element having the external thread 12 does not protrude from the lower opening of the ceiling cup 7 when the ceiling cup 7 is held against the ceiling surface to which the suspension element is attached.

Figure 4A further shows a cable 24 leading into the ceiling cup 7 from the outside via a cut-out 25. Especially in such a situation, it is advantageous to maintain the ceiling cup 7 stationary when mounting a pendant luminaire to the ceiling using an exemplary suspension assembly as disclosed herein.

This is achieved by configuring the fixing element 8 and the ceiling cup 7 such that the fixing element 8 and the ceiling cup 7 are rotatable with regard to each other in at least one direction of rotation, both during the mounting process and in the final mounting position. Particularly, the ceiling cup 7 and the fixing element 8 may be configured such that the ceiling cup 7 may be kept stationary while screwing the fixing element 8 to the suspension element by mating the internal thread of the threaded element with the external thread 12 of the suspension element.

In the final mounting position, as illustrated in Figure 4B, the ceiling cup 7 is pressed against the ceiling by the fixing element 8. In this position, a rotational movement in only one direction of rotation may be possible with respect to the stationary ceiling cup 7, namely the direction of rotation allowing unscrewing the fixing element 8 from the suspension.

Mounting a pendant luminaire from a ceiling using an above-described suspension element may comprise the following steps.

First, a cable or a cord is affixed to the suspension element, for instance, by introducing it into at least two through-holes as illustrated in Figure 2.

Thereafter, the suspension element is attached to the ceiling, for example, by hanging the suspension element from a ceiling hook as also illustrated in Figure 2.

In a next step, the cable of the pendant luminaire is inserted into a longitudinal channel of the threaded element of the fixing element, and the two parts of the fixing element are connected to each other. This step is illustrated in Figures 3A and 3B.

In a next step, the ceiling cup is moved towards the ceiling and held stationary in the desired position, while in a next step, the fixing element is tightened by mating the internal thread of the threaded element with the external thread of the suspension element. For this purpose, the fixing element is rotated until the ceiling cup is snugly fit against the ceiling.

Figures 5-7 show an alternative embodiment of the fixing element 8. The ceiling cup 7, as well as the suspension element 1 with the external thread 12, through-holes 9, 10, 11, the longitudinal channel 26, and longitudinal opening 13 are the same as have been described above with reference to Figures 1-4. Moreover, just as for the fixing element 8 described above, the alternative embodiment of the fixing element 8 shown in Figures 5-7 comprises two separate parts 14, 15 which are held together by a snap-fit connection, and a gripping portion 23 with grooves allowing a good grip.

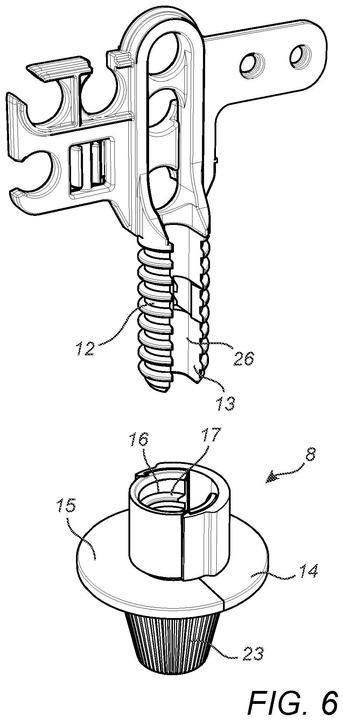

Figure 6 show the suspension element 1 and the fixing element 8 separated from each other to better disclose the details. Also for this embodiment of the fixing element 8, the threaded element 16 is provided on the second part 15 and comprises the internal thread 17 configured to cooperate with the external thread 12 of the suspension element 1.

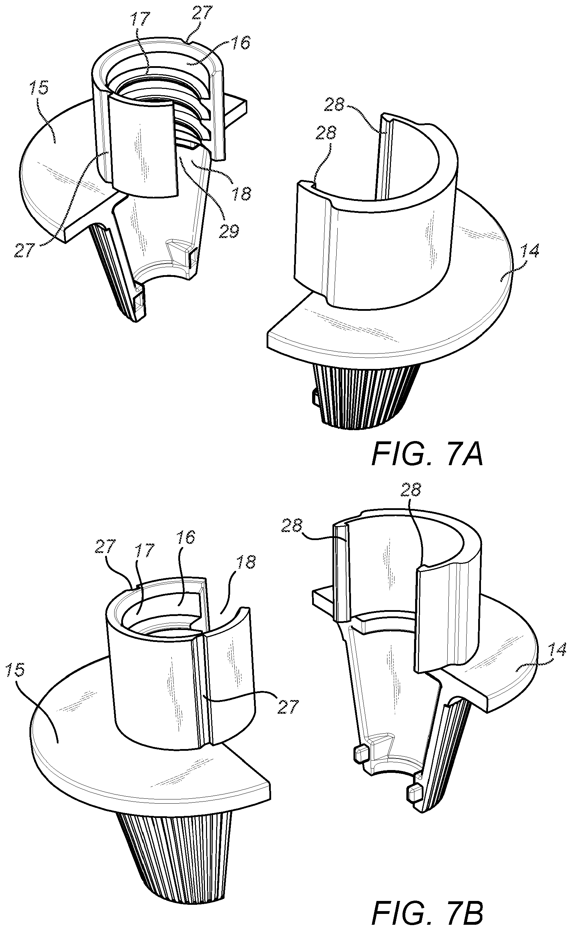

Figures 7A and 7B show the fixing element 8 with the first part 14 and the second part 15 separated from each other. The external side of the threaded element 16 of the second part 15 is provided with two grooves 27 extended in the same longitudinal direction as the longitudinal opening 18. In other words, the grooves 27 on the external side of the threaded element 16 is perpendicular to the grooves 17 on the internal side of the threaded element 16. The grooves 27 are arranged to cooperate with two hooks 28 arranged on the first part 14 to provide a snap-fit connection between the first part 14 and the second part 15. In the same manner as for the previous embodiment a longitudinal channel (29) is formed inside the threaded element (16) so that the cable (4) can be inserted.

Although the previously discussed embodiments and examples of the present invention have been described separately, it is to be understood that some or all of the above-described features can also be combined in different ways. The above-discussed embodiments are particularly not intended as limitations, but serve as examples, illustrating features and advantages of the invention.

## Claims

1. A suspension assembly for suspending a pendant luminaire from a ceiling (2), the suspension assembly comprising:
a suspension element (1) to be attached to the ceiling (2), comprising an external thread (12) and being configured for fixing a cable (4) or cord of the pendant luminaire, wherein the suspension element (1) comprises a longitudinal channel (26) provided for receiving the cable (4) and a longitudinal opening (13) to provide for insertion of the cable (4) ;
a ceiling cup (7); and
a fixing element (8) comprising a threaded element (16) with an internal thread (17) corresponding to the external thread (12) of the suspension element (1), the fixing element (8) being configured such that it fixes the ceiling cup (7) against the ceiling (2) when attaching the fixing element (8) to the suspension element (1) by mating the internal thread (17) of the threaded element (16) with the external thread (12) of the suspension element (1);
wherein the threaded element (16) comprises a longitudinal opening (18) so that the cable (4) can be inserted into a longitudinal channel (29) formed inside the threaded element (16);
wherein the fixing element (8) comprises two separate parts (14; 15) that are releasably attachable to each other or two parts that are connected to each other via a hinge;
**characterized in that** the threaded element (16) is arranged only on one of the two separate parts (14; 15) of the fixing element (8); and **in that** the ceiling cup (7) and the fixing element (8) are configured such that when mating the internal thread (17) of the threaded element (16) with the external thread (12) of the suspension element (1) and in the mounting position in which the fixing element (8) fixes the ceiling cup (7) against the ceiling (2), the fixing element (8) is rotatable relative to the ceiling cup (7) in at least one direction of rotation.

2. The suspension assembly according to claim 1, wherein the ceiling cup (7) comprises a first opening that faces towards the ceiling (2) in the mounting position in which the fixing element (8) fixes the ceiling cup (7) against the ceiling (2), and a second opening opposite to the first opening, wherein the diameter of the second opening is chosen such that a terminal block or an electric plug connected to the cable (4) or cord of the pendant luminaire is insertable through the second opening.

3. The suspension assembly according to one of the preceding claims, wherein the fixing element (8) comprises a gripping portion (23) comprising at least one groove and/or elevation.

4. The suspension assembly according to one of the preceding claims, wherein the two parts (14; 15) of the fixing element (8) are connectable via a snap-fit connection.

5. The suspension assembly according to one of the preceding claims, wherein the threaded element (16) is cylindrical and is configured to allow lateral insertion of the cable (4) or cord of the pendant luminaire into the interior of the cylindrical threaded element.

6. The suspension assembly according to claim 5, wherein the threaded element (16) comprises a longitudinal opening (18) or slot for receiving the cable (4) or cord of the pendant luminaire.

7. The suspension assembly according to one of the preceding claims, wherein the ceiling cup (7) comprises a cut-out (25) on a side facing the ceiling (2) in the mounting position, so that in the mounting position, a cable (24) can lead into the ceiling cup (7) from the outside via the cut-out (25).

8. The suspension assembly according to one of the preceding claims, wherein the fixing element (8) is an injection-molded part.

## Patentansprüche

1. Aufhängungsanordnung zum Aufhängen einer hängenden Leuchte an einer Raumdecke (2), wobei die Aufhängungsanordnung umfasst:
ein Aufhängungselement (1), das an der Decke (2) anzubringen ist, ein Außengewinde (12) umfasst und zum Befestigen eines Kabels (4) oder einer Schnur der hängenden Leuchte konfiguriert ist, wobei das Aufhängungselement (1) einen zur Aufnahme des Kabels (4) vorgesehenen Längskanal (26) und eine Längsöffnung (13) zum Einführen des Kabels (4) umfasst;
eine Deckenkappe (7); und
ein Befestigungselement (8), umfassend ein Gewindeelement (16) mit einem Innengewinde (17) entsprechend dem Außengewinde (12) des Aufhängungselements (1), wobei das Befestigungselement (8) so konfiguriert ist, dass es die Deckenkappe (7) an der Decke (2) befestigt beim Anbringen des Befestigungselements (8) an dem Aufhängungselement (1) durch Zusammenfügen des Innengewindes (17) des Gewindeelements (16) mit dem Außengewinde (12) des Aufhängungselements (1);
wobei das Gewindeelement (16) eine Längsöffnung (18) aufweist, so dass das Kabel (4) in einen Längskanal (29) eingeführt werden kann, der innerhalb des Gewindeelements (16) ausgebildet ist;
wobei das Befestigungselement (8) zwei getrennte Teile (14; 15) umfasst, die lösbar miteinander verbunden werden können, oder zwei Teile, die über ein Scharnier miteinander verbunden sind;
**dadurch gekennzeichnet, dass** das Gewindeelement (16) nur an einem der beiden getrennten Teile (14; 15) des Befestigungselements (8) angeordnet ist; und dass die Deckenkappe (7) und das Befestigungselement (8) so konfiguriert sind, dass beim Zusammenfügen des Innengewindes (17) des Gewindeelements (16) mit dem Außengewinde (12) des Aufhängungselements (1) und in der Montageposition, in der das Befestigungselement (8) die Deckenkappe (7) an der Raumdecke (2) befestigt, das Befestigungselement (8) relativ zu der Deckenkappe (7) in mindestens einer Drehrichtung drehbar ist.

2. Aufhängungsanordnung nach Anspruch 1, wobei die Deckenkappe (7) eine erste Öffnung aufweist, die in der Montageposition, in der das Befestigungselement (8) die Deckenkappe (7) gegen die Raumdecke (7) befestigt, zu der Raumdecke (2) zeigt, und eine zweite Öffnung gegenüber der ersten Öffnung, wobei der Durchmesser der zweiten Öffnung so gewählt ist, dass ein Klemmenblock oder ein elektrischer Stecker, der mit dem Kabel (4) oder der Schnur der hängenden Leuchte verbunden ist, durch die zweite Öffnung einsetzbar ist.

3. Aufhängungsanordnung nach einem der vorhergehenden Ansprüche, wobei das Befestigungselement (8) einen Greifabschnitt (23) umfasst, der mindestens eine Nut und / oder Erhebung umfasst.

4. Aufhängungsanordnung nach einem der vorhergehenden Ansprüche, wobei die zwei Teile (14; 15) des Befestigungselements (8) über eine Schnappverbindung verbindbar sind.

5. Aufhängungsanordnung nach einem der vorhergehenden Ansprüche, wobei das Gewindeelement (16) zylindrisch ist und konfiguriert ist, um ein seitliches Einführen des Kabels (4) oder der Schnur der hängenden Leuchte in das Innere des zylindrischen Gewindeelements zu ermöglichen.

6. Aufhängungsanordnung nach Anspruch 5, wobei das Gewindeelement (16) eine Längsöffnung (18) oder einen Schlitz zum Aufnehmen des Kabels (4) oder der Schnur der hängenden Leuchte umfasst.

7. Aufhängungsanordnung nach einem der vorhergehenden Ansprüche, wobei die Deckenkappe (7) einen Ausschnitt (25) auf einer der Raumdecke (2) zugewandten Seite in der Montageposition aufweist, so dass in der Montageposition ein Kabel (24) von außen über den Ausschnitt (25) in die Deckenkappe (7) führen kann.

8. Aufhängungsanordnung nach einem der vorhergehenden Ansprüche, wobei das Befestigungselement (8) ein Spritzgussteil ist.

## Revendications

1. Ensemble suspension permettant de suspendre un luminaire suspendu à un plafond (2), l'ensemble suspension comprenant :
un élément de suspension (1) à fixer au plafond (2), comprenant un filetage externe (12) et étant conçu pour fixer un câble (4) ou un cordon du luminaire suspendu, dans lequel l'élément de suspension (1) comprend un canal longitudinal (26) prévu pour recevoir le câble (4) et une ouverture longitudinale (13) prévue pour introduire le câble (4) ;
une coupelle (7) de plafond ; et
un élément de fixation (8) comprenant un élément fileté (16) ayant un filetage interne (17) correspondant au filetage externe (12) de l'élément de suspension (1), l'élément de fixation (8) étant conçu de façon à fixer la coupelle (7) de plafond contre le plafond (2) lors de la fixation de l'élément de fixation (8) à l'élément de suspension (1) par un accouplement du filetage interne (17) de l'élément fileté (16) avec le filetage externe (12) de l'élément de suspension (1) ;
dans lequel l'élément fileté (16) comprend une ouverture longitudinale (18) de façon à pouvoir introduire le câble (4) dans un canal longitudinal (29) formé à l'intérieur de l'élément fileté (16) ;
dans lequel l'élément de fixation (8) comprend deux parties distinctes (14 ; 15) qui sont fixées l'une à l'autre de manière libérable ou deux parties qui peuvent être reliées l'une à l'autre par le biais d'une charnière ;
**caractérisé en ce que** l'élément fileté (16) n'est disposé que sur l'une des deux parties distinctes (14 ; 15) de l'élément de fixation (8) ; et **en ce que** la coupelle (7) de plafond et l'élément de fixation (8) sont conçus de sorte que, lors de l'accouplement du filetage interne (17) de l'élément fileté (16) avec le filetage externe (12) de l'élément de suspension (1) et dans la position de montage dans laquelle l'élément de fixation (8) fixe la coupelle (7) de plafond contre le plafond (2), l'élément de fixation (8) peut tourner par rapport à la coupelle (7) de plafond dans au moins un sens de rotation.

2. Ensemble suspension selon la revendication 1, dans lequel la coupelle (7) de plafond comprend une première ouverture qui est orientée vers le plafond (2) dans la position de montage dans laquelle l'élément de fixation (8) fixe la coupelle (7) de plafond contre le plafond (2), et une seconde ouverture opposée à la première ouverture, dans lequel le diamètre de la seconde ouverture est choisi de sorte qu'un bornier ou une prise électrique connecté au câble (4) ou au cordon du luminaire suspendu puisse être introduit à travers la seconde ouverture.

3. Ensemble suspension selon l'une des revendications précédentes, dans lequel l'élément de fixation (8) comprend une partie de saisie (23) comprenant au moins une rainure et/ou une élévation.

4. Ensemble suspension selon l'une des revendications précédentes, dans lequel les deux parties (14 ; 15) de l'élément de fixation (8) peuvent être reliées par le biais d'une liaison à encliquetage.

5. Ensemble suspension selon l'une des revendications précédentes, dans lequel l'élément fileté (16) est cylindrique et est configuré pour permettre une introduction latérale du câble (4) ou du cordon du luminaire suspendu à l'intérieur de l'élément fileté cylindrique.

6. Ensemble suspension selon la revendication 5, dans lequel l'élément fileté (16) comprend une ouverture longitudinale (18) ou une fente destinée à recevoir le câble (4) ou le cordon du luminaire suspendu.

7. Ensemble suspension selon l'une des revendications précédentes, dans lequel la coupelle (7) de plafond comprend une découpe (25) d'un côté faisant face au plafond (2) dans la position de montage, de sorte que, dans la position de montage, un câble (24) puisse entrer dans la coupelle (7) de plafond depuis l'extérieur par le biais de la découpe (25).

8. Ensemble suspension selon l'une des revendications précédentes, dans lequel l'élément de fixation (8) est une partie moulée par injection.
